# EUROPÄISCHE PATENTSCHRIFT

(11) **EP 0 537 516 B1**
(45) Veröffentlichungstag und Bekanntmachung des Hinweises auf die Patenterteilung: **14.01.1998**
(21) Anmeldenummer: 92116230.1
(22) Anmeldetag: 23.09.1992
(51) Int. Cl.: B01D 36/04, B01D 21/24, B01D 21/32

(54) **Verfahren zur Aufbereitung einer Rückspülflüssigkeit eines Rückspülfilters sowie Sedimentationseinrichtung für Reinigungsflüssigkeiten**
Process for treating back-wash liquid from a back-wash filter and sedimentation device for cleaning liquids
Procédé pour le traitement de liquides de lavage à contre-courant provenant d'un filtre au lavage à contre-courant et dispositif du sédimentation pour liquides de lavage

(30) Priorität: 05.10.1991 DE 4133099
(43) Veröffentlichungstag der Anmeldung: 21.04.1993
(73) Patentinhaber: Dürr Ecoclean GmbH, 70794 Filderstadt (DE)
(72) Erfinder: Wüller, Karl-Heinz, W-5107 Simmerath (DE)
(74) Vertreter: Hoeger, Stellrecht & Partner

(56) Entgegenhaltungen:
- DE-A- 2 531 748
- DE-A- 3 800 613
- GB-A- 587 721
- US-A- 3 399 775
- US-A- 4 348 279

## Beschreibung

Die Erfindung betrifft ein Verfahren zur Aufbereitung einer Schmutzpartikel enthaltenden Rückspülflüssigkeit eines Rückspülfilters für eine in einem Reinigungsprozeß eingesetzte Reinigungsflüssigkeit. Dabei hat die Aufbereitung die Abtrennung von Schmutzpartikeln von der Rückspülflüssigkeit zum Gegenstand.

Des weiteren betrifft die Erfindung eine Sedimentationseinrichtung zur Aufbereitung einer Schmutzpartikel enthaltenden Reinigungsflüssigkeit eines industriellen Reinigungsprozesses mit einem einen verschließbaren Einlaß aufweisenden Sedimentationsbehälter für die aufzubereitende Reinigungsflüssigkeit, der einen ersten Bereich zur Aufnahme der durch Sedimentation aufbereiteten Reinigungsflüssigkeit sowie einen darunter befindlichen Sedimentsammelbereich umfaßt.

Schließlich betrifft die Erfindung eine Aufbereitungsvorrichtung für eine in einem industriellen Reinigungsprozeß eingesetzte Reinigungsflüssigkeit, und zwar eine Aufbereitungsvorrichtung mit einem eine Austragsleitung für verschmutzte Rückspülflüssigkeit aufweisenden Rückspülfilter und einer Sedimentationseinrichtung der vorstehend erwähnten Art.

Außerdem betrifft die Erfindung eine industrielle Reinigungsanlage mit einem Reinigungsgerät, einem eine Austragsleitung für verschmutzte Rückspülflüssigkeit aufweisenden Rückspülfilter zur Aufbereitung von in dem Reinigungsgerät verwendeter Reinigungsflüssigkeit, und mit einer Sedimentationseinrichtung der vorstehend erwähnten Art.

Bei einem vom Markt her bekannten Verfahren der vorstehend erwähnten Art wird aus dem Rückspülfilter abgeführte Rückspülflüssigkeit unter Verwendung von Flachmaterialbahnfiltern, insbesondere Papierbandfiltern, von festen Schmutzpartikeln befreit. Dabei ist ein Flachmaterialbahnfilter über einem ausreichend groß dimensionierten RückspülflüssigkeitsSammelbehälter angeordnet, so daß die aus dem Rückspülfilter ausgetragene Rückspülflüssigkeit, nachdem sie auf den Bandfilter geleitet wurde, durch das Filtermaterial hindurchtritt, dabei weitgehend von Schmutzpartikeln befreit wird und dann in den Sammelbehälter fließt, während die abgetrennten Verunreinigungen mit dem sich stetig oder zyklisch abrollenden Bandfilter in einen separaten Entsorgungsbehälter transportiert werden. Die im Rückspülflüssigkeits-Sammelbehälter sich ansammelnde Rückspülflüssigkeit wird über eine eine Pumpe aufweisende Leitung zum Reinigungsprozeß oder gegebenenfalls zum Rückspülfilter zurückgeführt, wodurch eine Kreisführung der Flüssigkeit erreicht ist. Derartige Verfahren haben aber den Nachteil, daß erhebliche Mengen von Filtermaterial anfallen, welche gemeinsam mit den darauf befindlichen Verunreinigungen entsorgt werden müssen. Aufgrund der benötigten hohen Durchflußmengen der primär aufzubereitenden Reinigungsflüssigkeit durch den Rückspülfilter und aufgrund des an Behandlungssystemen des Reinigungsprozesses, wie z. B. Düsen, gewünschten Druckes herrschen im Inneren des Rückspülfilters Drücke zwischen 3 und 10 bar, so daß sich das Austragen von Rückspülflüssigkeit aus dem Rückspülfilter als äußerst problematisch erweist. Einerseits müßte nämlich im Rückspülfilter eine möglichst kleine Austragsöffnung vorgesehen sein, um die ausströmende Menge an Rückspülflüssigkeit zu begrenzen, andererseits müßte die Austragsöffnung, um nicht zu verstopfen, hinreichend groß ausgebildet sein. Bei Verwendung einer klein ausgebildeten Austragsöffnung oder eines Drosselventils, besteht neben der Gefahr des Verstopfens die Gefahr, daß der entstehende starke Flüssigkeitsstrahl den Flachmaterialbahnfilter beschädigt; deshalb mündet bei einem bekannten Rückspülfilter eine ein Drosselventil aufweisende Austragleitung in einen aufwendig groß dimensionierten Beruhigungsbehälter, aus dem die mit Verunreinigungen beladene Rückspülflüssigkeit dann auf den Flachmaterialbahnfilter gelangt. Ein weiterer Nachteil bekannter Aufbereitungsverfahren ist, daß durch die teiloffene Prozeßführung erhebliche Energiemengen durch Abdampfen der ursprünglich als erhitzte Reinigungsflüssigkeit im Reinigungsprozeß eingesetzten Rückspülflüssigkeit sowie durch notwendigerweise schlechte Isolation verloren gehen. Noch ein weiterer Nachteil ist darin zu sehen, daß bei der bekannten teiloffenen Prozeßführung die Umgebung durch Abdampfen und Schwadenaustritt stark angefeuchtet wird und auf diese Weise Chemikalienanteile in die Umgebung abgegeben werden.

Der vorliegenden Erfindung liegt daher die Aufgabe zugrunde, ein Verfahren der eingangs beschriebenen Art zu entwickeln, bei dem die vorstehend beschriebenen Nachteile nicht auftreten, das wirtschaftlicher durchführbar und hinsichtlich der beispielsweise verstopfungsbedingten Störanfälligkeit zuverlässiger ist als bekannte Verfahren.

Ausgehend von einem Verfahren der eingangs erwähnten Art läßt sich diese Aufgabe erfindungsgemäß dadurch lösen, daß aus dem Rückspülfilter abgeführte Rückspülflüssigkeit einem Sedimentationsprozeß unterworfen und dabei zumindest zeitweise mit Druck beaufschlagt wird und daß nach Abschluß des Sedimentationsprozesses die Rückspülflüssigkeit mindestens von einem Teil eines dabei gewonnenen Sediments druckdicht abgetrennt und letzterer anschließend entfernt wird sowie ein zumindest weitgehend von Schmutzpartikeln befreiter Teil der Rückspülflüssigkeit in den Reinigungsprozeß zurückgeführt wird.

An die Stelle der Filtration von aus dem Rückspülfilter abgeführter Rückspülflüssigkeit unter Verwendung von Filterhilfsmitteln, wie Papierbandfiltern, tritt beim erfindungsgemäßen Verfahren ein Sedimentationsprozeß, der ohne die Verwendung von Filterhilfsmitteln durchgeführt wird. Dadurch, daß die aufzubereitende Rückspülflüssigkeit hierzu in einen druckdicht abgeschlossenen Sedimentationsbehälter abgeführt wird, kann, um eine Verstopfung zu verhindern, eine hinreichend große Austragöffnung im Rückspülfilter vorgesehen werden, da der druckdicht abgeschlossene Sedimentationsbehälter den Austritt von Rückspülflüssigkeit aus dem Rückspülfilter auf sein Volumen begrenzt. Da die Rückspülflüssigkeit während des Sedimentationsprozesses zumindest zeitweise mit Druck beaufschlagt wird, werden die Absinkzeiten bei komprimierbaren und/oder porösen Schmutzpartikeln verringert. Komprimierbare und/oder poröse Schmutzpartikel, wie Zellulose, Holzspäne etc., deren Dichte normalerweise geringer als die Dichte der Rückspülflüssigkeit ist und welche deshalb auch beim Stand der Technik nicht sedimentieren, werden durch die erfindungsgemäße Druckbeaufschlagung zum Absinken gebracht.

Dadurch, daß nach Abschluß des Sedimentationsprozesses, wenn also weitgehend von Schmutzpartikeln befreite Rückspülflüssigkeit oberhalb von abgeschiedenem Sediment vorliegt, die Rückspülflüssigkeit mindestens von einem Teil des Sediments druckdicht abgetrennt wird, werden bereits abgeschiedene Schmutzpartikel des abgetrennten Teiles des Sedimentes nicht mehr durch Turbulenzen, die bei der Rückführung von Rückspülflüssigkeit auftreten, aufgewirbelt oder sogar zum Reinigungsprozeß zurückgeführt. Ein weiterer Vorteil ist darin zu sehen, daß die Reihenfolge der Verfahrensschritte "Rückführung von Rückspülflüssigkeit" und "Entfernung von Sediment" variiert werden kann, da infolge der druckdichten Abtrennung bei der Entfernung von Sediment keine Rückspülflüssigkeit austreten kann.

Das erfindungsgemäße Verfahren erweist sich als ganz besonders vorteilhaft, wenn bei stark verschmutzter Rückspülflüssigkeit das Volumen eines zur Aufnahme des Sedimentes vorgesehenen Sedimentsammelbereiches zur Aufnahme des gesamten Sedimentes nicht ausreichend ist und somit nur ein Teil des Sedimentes von der Rückspülflüssigkeit abgetrennt wird, da dann dieser abgetrennte Teil entfernt und anschließend nach Beseitigung der Trennung der Sedimentationsprozeß fortgeführt werden kann, bis sich das gesamte verbleibende Sediment im Sedimentsammelbereich angesammelt hat. Durch diese Verfahrensführung kann also verhindert werden, daß bei der Rückführung von Rückspülflüssigkeit in den Reinigungsprozeß sedimentierte Schmutzpartikel aufgewirbelt und gleichfalls zurückgeführt werden.

Nach Abtrennen zumindest eines Teils des Sediments kann die Rückspülflüssigkeit zumindest teilweise zum Reinigungsprozeß zurückgeführt werden. Dabei ist es vorteilhaft, wenn der Sedimentationsbehälter so angeordnet ist, daß das Niveau der "sedimentierenden Flüssigkeit", d. h. der Schmutzpartikel enthaltenden Rückspülflüssigkeit, welche gerade einem Sedimentationsprozeß unterworfen wird, oberhalb des Niveaus der im Reinigungsprozeß verwendeten Reinigungsflüssigkeit liegt, so daß die Rückspülflüssigkeit, ohne daß eine Pumpe verwendet werden muß, zum Reinigungsprozeß zurückgeführt werden kann. Ist eine Pumpe mit hinreichend hohem Ausgangsdruck vorgesehen, so kann die Rückspülflüssigkeit auch ganz oder teilweise direkt zum Rückspülfilter zurückgeführt werden.

Weiterhin ist es denkbar, zurückzuführende Rückspülflüssigkeit vor Einleitung in den Reinigungsprozeß einem weiteren Aufbereitungsprozeß zu unterziehen, in welchem beispielsweise emulgierte Öle und/oder Fette abgeschieden, sowie waschaktive Substanzen zurückgewonnen werden.

Aus der DE-A-38 00 613 ist ein Verfahren sowie eine Anlage zur Aufbereitung von Wasser oder zur Reinigung von Abwasser, vornehmlich zu dessen Endreinigung, bekannt geworden. Bei dieser bekannten Anlage werden Filter während der Reinigung des Wassers von unten nach oben durchströmt, wobei sich oberhalb der Filter ein Sammelraum für das Filtrat befindet. Zur Rückspülung der Filter werden die letzteren unter der Wirkung der Schwerkraft von dem in diesem Sammelraum enthaltenen, filtrierten Wasser von oben nach unten durchströmt, und das mit den zuvor ausfiltrierten Partikeln beladene Spülwasser wird in den unteren Bereich eines Spülwasser-Entsorgungsbehälters eingeleitet, wobei der letztere oben verschlossen ist, so daß sich bei diesem Vorgang im oberen Bereich des Entsorgungsbehälters ein Druckluftpolster bildet. In dem Entsorgungsbehälter kommt das Spülwasser zur Ruhe, und die mit dem Spülwasser in den Entsorgungsbehälter gelangten Partikel setzen sich in einem unteren, konischen Bereich des Entsorgungsbehälters ab. Nach Beendigung des Sedimentationsprozesses wird anläßlich der Wiederaufnahme des Aufbereitungsvorgangs das im Spülwasser-Entsorgungsbehälter über dem Sediment stehende Wasser von unten nach oben durch die Filter gedrückt, und zwar unter der Wirkung des zuvor oben im Entsorgungsbehälter gebildeten Druckluftpolsters; zu diesem Zweck münden oberhalb des Sedimentsammelbereichs des Entsorgungsbehälters in diesen Spülwasser-Rückführleitungen ein. Der DE-A-38 00 613-A1 läßt sich nicht entnehmen, wie das im unteren, konischen Bereich des Spülwasser-Entsorgungsbehälters angesammelte Sediment abgeführt werden soll - es wird lediglich ausgeführt, daß das Sediment von Zeit zu Zeit auf nicht dargestellte Weise entfernt werden soll.

Aus der US-A-3 399 775 ist eine Einrichtung zur Behandlung von Abwasser bekannt geworden, durch die im Abwasser enthaltenes körniges anorganisches Material von organischen Abwasserbestandteilen getrennt werden soll. Diese Trenneinrichtung besitzt einen Sedimentationsbehälter, der oben eine durch eine Klappe verschließbare Öffnung und unten eine durch einen Schieber verschließbare Öffnung besitzt. An die obere Öffnung schließt sich nach oben hin ein Einfülltrichter an, und an die durch den Schieber verschließbare untere Öffnung ist ein Auswurfrohr angeschlossen. Das dem Trennvorgang zu unterwerfende Abwasser wird bei offener oberer Behälteröffnung und geschlossener unterer Behälteröffnung von oben durch den Einfülltrichter in den Sedimentationsbehälter eingeführt, worauf sich in diesem das körnige, anorganische Material durch Sedimentation absetzen soll. Dieses körnige anorganische Material wird während des Sedimentierens gewaschen, indem über einen unmittelbar oberhalb des genannten Schiebers angeordneten Waschwassereinlaß Waschwasser in den Sedimentationsbehälter eingeleitet wird, was zur Folge hat, daß Wasser und spezifisch leichte organische Bestandteile des Abwassers über die während des Sedimentations- und Waschvorgangs nicht verschlossene obere Öffnung des Sedimentationsbehälters, den Einfülltrichter und ein in den letzteren einmündendes Überlaufrohr aus dem Sedimentationsbehälter ausgetragen werden. Sodann wird die obere Öffnung durch die ihr zugeordnete Klappe verschlossen und die untere Öffnung des Sedimentationsbehälters durch Betätigen des Schiebers geöffnet, worauf der mit Wasser und Sediment gefüllte Sedimentationsbehälter in seinem oberen Bereich über eine Druckluftleitung mit Druckluft beaufschlagt wird, und zwar zu dem Zweck, den gesamten Behälterinhalt (Wasser und Sediment) aus dem Sedimentationsbehälter auszutreiben und über das untere Auswurfrohr auszuwerfen. Da in dem Sedimentationsbehälter Sediment und über dem letzteren stehendes Wasser nicht voneinander abgetrennt werden können, werden bei dem Druckluft-unterstützten Entleeren des Sedimentationsbehälters nicht nur das Sediment, sondern auch das im Sedimentationsbehälter enthaltene Wasser ausgeworfen.

Aus der US-A-4 348 279 ergibt sich eine Sedimentationseinrichtung zur Aufbereitung von Bohrschlamm. Diese Sedimentationseinrichtung hat einen Sedimentationsbehälter mit einem trichterförmigen oberen Bereich, an den sich nach unten ein zylindrischer Behälterbereich anschließt. Der trichterförmige obere Bereich ist an seinem oberen Ende an einen Einström- und an einen diametral gegenüberliegenden Ausströmkanal angeschlossen, welche beide quer zur Behälterachse orientiert sind; der zylindrische Behälterbereich läßt sich oben und unten durch schwenkbare Klappen verschließen, wobei die beiden Klappen so miteinander gekoppelt sind, daß wenn die eine Klappe ihre Offenstellung einnimmt, sich die andere zwangsläufig in ihrer Schließstellung befindet, was zur Folge hat, daß sich z. B. die untere Klappe bereits dann zu öffnen beginnt, wenn sich die obere Klappe zu schließen beginnt. Bei dieser bekannten Sedimentationseinrichtung ist der Sedimentationsbehälter oben also stets offen und wird oben stets mit aufzubereitender Flüssigkeit durchströmt, und die Kopplung der beiden beschriebenen Klappen hat zur Folge, daß beim Öffnen der unteren Klappe nicht nur Sediment nach unten aus dem Sedimentationsbehälter ausgetragen wird, sondern notwendigerweise auch zumindest ein erheblicher Teil der mehr oder minder gut geklärten Flüssigkeit, welche im Sedimentationsbehälter über dem Niveau der Schwenkachse der oberen Klappe steht.

Schließlich ergibt sich aus der lediglich unter Art. 54 (3) EPÜ zu berücksichtigenden EP-A-0 469 764 eine Sedimentationseinrichtung, welche einen Sedimentationsbehälter umfaßt, dessen oberer Bereich gleichfalls trichterförmig und dessen unterer Bereich gleichfalls zylindrisch ausgebildet ist. Auch dieser bekannte Sedimentationsbehälter ist oben ständig offen und wird bereichsweise ständig von Flüssigkeit durchströmt, nämlich von der kontinuierlich in den Sedimentationsbehälter eintretenden, zu klärenden Flüssigkeit, die bei der einen Ausführungsform zu einem am oberen Behälterrand vorgesehenen Überlauf strömt, bei der anderen Ausführungsform zu einem Ausströmkanal, welcher auf halber Höhe des trichterförmigen Behälterbereichs in dessen Wandung mündet und Bestandteil eines ständig betriebenen Filtrationskreislaufes ist.

Die Druckbeaufschlagung der sedimentierenden Flüssigkeit kann in beliebiger Weise etwa durch Flüssigkeitssäulen oder dafür vorgesehene Pumpen bewirkt werden, besonders vorteilhaft und einfach ist es jedoch, die sedimentierende Flüssigkeit mit dem auf der Anströmseite des Rückspülfilters herrschenden Druck zu beaufschlagen.

Der zur Durchführung des Verfahrens dienende, druckdicht abgeschlossene Sedimentationsbehälter könnte vollständig mit zu sedimentierender Rückspülflüssigkeit gefüllt werden, vorteilhafter ist es jedoch, wenn im Zuge der Druckbeaufschlagung oder der Befüllung des Sedimentationsbehälters über der zu sedimentierenden Flüssigkeit ein Druckluftpolster gebildet wird. Wird nämlich der nur Luft enthaltende, druckdicht abgeschlossene Sedimentationsbehälter mit unter einem Systemdruck stehender Flüssigkeit gefüllt, so wird die im Behälter befindliche Luft komprimiert und nach dem Befüllungsvorgang in Form eines den Systemdruck aufweisenden Druckluftpolsters in einem oberen Bereich des Behälters vorliegen. Dieses Druckluftpolster stellt einen Arbeitsspeicher dar und kann gegebenenfalls zum Auswerfen des Sediments oder auch zum Ausblasen von Leitungen oder ähnlichem entspannt werden. Ebenfalls verhindert dieses Luftpolster Wasserschläge.

Da sedimentierte Stoffe bzw. ein sich bildender Sedimentkuchen dazu neigen, an den Wänden des sie umgebenden Sedimentsammelbereiches anzubacken, gestaltet sich die Entfernung von Sediment häufig schwierig. Dem wird erfindungsgemäß dadurch begegnet, daß das vorstehend erwähnte, oberhalb der wässrigen Phase befindliche Druckluftpolster zu einem druckluftunterstützten Sedimentauswurf verwendet und entspannt wird, nachdem die Rückspülflüssigkeit, wie ebenfalls vorstehend beschrieben, von einem Teil des Sediments druckdicht abgetrennt wurde. Der Sedimentkuchen wird dabei aus dem Sedimentsammelbereich "herausgesprengt".

Da der abgetrennte Teil des Sediments nicht nur aus Schmutzpartikeln besteht, sondern daneben noch Flüssigkeit enthält, ist es vorteilhaft, vor Entfernen des Sediments die Flüssigkeit abzulassen und zum Reinigungsprozeß, soweit vorhanden, zu einer Schmutzseite des Reinigungsprozesses, zurückzuführen.

Für die Dauer des Sedimentationsprozesses kann eine stets gleiche Zeit festgelegt werden, hinsichtlich einer wirtschaftlichen Prozeßführung wird die Dauer des Sedimentationsprozesses jedoch vorzugsweise nach Art und Grad der Verschmutzung der Rückspülflüssigkeit bestimmt.

Im Hinblick auf eine Automatisierung der Prozeßführung ist es vorteilhaft, den Sedimentationsprozeß durch einen die Sedimentmenge messenden Sensor zu beenden; auf diese Weise wird die Dauer des Sedimentationsprozesses, ohne daß Informationen über Verschmutzungsgrad und spezifische Sinkgeschwindigkeiten verschiedener Verunreinigungen bekannt sein müssen, automatisch und ökonomisch bestimmt.

Zur Beendung des Sedimentationsprozesses wird durch diesen Sensor die Rückführung von Rückspülflüssigkeit und/oder die druckdichte Abtrennung mindestens eines Teils des Sedimentes von der Rückspülflüssigkeit eingeleitet. Im Anschluß daran wird der Sedimentausstoß vorzugsweise sensorgesteuert ausgelöst.

Nach einer weiteren der Erfindung zugrundeliegenden Aufgabe sollte eine Sedimentationseinrichtung geschaffen werden, mit deren Hilfe ganz allgemein das Abtrennen von Schmutzpartikeln von einer Reinigungsflüssigkeit durch Sedimentation verbessert und/oder beschleunigt werden kann.

Zur Lösung dieser Aufgabe wird eine Sedimentationseinrichtung der eingangs erwähnten Art so ausgebildet, daß der Sedimentationsbehälter druckdicht verschließbar ist, daß der erste Bereich und der Sedimentsammelbereich durch eine Trennvorrichtung druckdicht voneinander abtrennbar sind und daß der Sedimentsammelbereich zum Abführen des Sediments einen Behälterauslaß aufweist, welcher durch einen nach dem Schließen der Trennvorrichtung öffenbaren Verschluß verschließbar ist.

Dabei ist es vorteilhaft, wenn der Sedimentationsbehälter als Druckbehälter ausgebildet ist, so daß er mit unter Druck stehender Reinigungsflüssigkeit befüllt werden kann oder daß im Sedimentationsbehälter sedimentierende Reinigungsflüssigkeit mit einem Druck beaufschlagt werden kann, wofür noch geeignete Druckbeaufschlagungsmittel vorzusehen sind.

Als besonders vorteilhaft hat es sich erwiesen, von einem oberen Teilbereich des Sedimentationsbehälters, der zur Aufnahme eines Druckluftpolsters ausgebildet ist, eine ein Ventil aufweisende Verbindungsleitung zu dem Sedimentsammelbereich vorzusehen, über die das Druckluftpolster in den Sedimentsammelbereich entspannt und somit ein Sedimentauswurf unterstützt werden kann. Dabei ist es empfehlenswert, die Verbindungsleitung in eine obere Zone des Sedimentsammelbereichs zu führen.

Ganz besonders vorteilhaft ist es, wenn die erfindungsgemäße Sedimentationseinrichtung bzw. der Sedimentationsbehälter über den Behältereinlaß an einen Rückspülfilter anschließbar ist und zur Durchführung des erfindungsgemäßen Verfahrens verwendet werden kann.

Um eine Kreisführung der einem Reinigungsprozeß entnommenen und aufzubereitenden Reinigungsflüssigkeit oder der Rückspülflüssigkeit eines dem Reinigungsprozeß nachgeschalteten Rückspülfilters zu ermöglichen, wird vorgeschlagen, eine Rückführleitung vorzusehen, die den ersten Bereich des Sedimentationsbehälters mit dem Reinigungsprozeß verbindet. Sofern der Reinigungsprozeß z. B. Düsenvorrichtungen, mittels derer die abzureinigenden Gegenstände abgesprüht werden, und einen Reinigungsflüssigkeitssammelbehälter zum Auffangen der Reinigungsflüssigkeit umfaßt, so ist es vorteilhaft, wenn die Rückführleitung den ersten Bereich mit dem abstromseitig bzw. schmutzseitig der Düsenvorrichtung angeordneten Sammelbehälter verbindet.

Bei einer bevorzugten Ausführungsform der Sedimentationseinrichtung ist im oberen Teilbereich ein Druckschalter vorgesehen zur Steuerung eines im Behältereinlaß befindlichen Zulaufventiles; dies hat den Vorteil, daß bei Befüllung des Behälters mit unter einem Systemdruck stehender Flüssigkeit der Behälter durch druckschaltergesteuertes Schließen des Zulaufventiles bei Erreichen des Systemdruckes im Behälter automatisch abgeschlossen und somit der Befüllungsvorgang automatisch beendet werden kann.

Der erste Bereich und der Sedimentsammelbereich des Sedimentationsbehälters können durch zwei gegeneinander abschließbare Bereiche eines einzigen Behälters gegeben sein, es kann sich hierbei aber auch um zwei separate, durch eine einen hinreichenden Durchmesser aufweisende Leitung oder durch die Trennvorrichtung verbundene Behälter handeln. Bei einer bevorzugten Ausführungsform ist der Sedimentsammelbereich sogar als abnehmbare Sedimentsammelkammer ausgebildet; dies kann sich als besonders vorteilhaft erweisen, wenn das Sediment giftige Substanzen umfaßt, die dann innerhalb der Sedimentsammelkammer zu besonderen Entsorgungsanlagen transportiert werden können.

Weiterhin wird vorgeschlagen, die Sedimentationseinrichtung so auszubilden, daß der Füllungsgrad des Sedimentsammelbereiches jederzeit festgestellt werden kann; hierzu ist es vorteilhaft, im Sedimentsammelbereich einen Sensor anzuordnen, der beispielsweise auf induktive Weise auf stets vorhandene Eisenspäne oder dergl. ansprechen könnte. Ganz besonders vorteilhaft ist es in diesem Fall, wenn die Trennvorrichtung sensorsteuerbar ausgebildet ist und mit dem Sensor derart zusammenwirkt, daß sie bei Erreichen eines bestimmten Sollfüllstandes des Sedimentsammelbereiches automatisch schließt.

Weiterhin ist die Trennvorrichtung zweckmäßigerweise so ausgebildet, daß ihre Durchtrittsfläche um ein Vielfaches größer als der Durchmesser der sedimentierenden Schmutzpartikel ist, so daß diese die Trennvorrichtung nicht verstopfen. Besonders große und gut abdichtbare Durchtrittsflächen lassen sich mit Flachschieberventilen erreichen, weshalb diese bei erfindungsgemäßen Sedimentationseinrichtungen sowohl als Trennvorrichtung als auch als Verschluß des Sedimentsammelbereiches bevorzugt Anwendung finden. Ebenso können hier Kugelhähne Verwendung finden.

Um die Folgen des Anbackens des Sedimentkuchens an den Wänden des Sedimentsammelbereiches zu verringern, wird vorgeschlagen, eine bevorzugte Sedimentationseinrichtung bzw. einen bevorzugten Sedimentationsbehälter so auszubilden, daß sich der Sedimentsammelbereich nach unten konisch erweitert. Um die Verstopfungsgefahr in der Trennvorrichtung zu verringern und zu gewährleisten, daß sedimentierende Schmutzpartikel möglichst vollständig in den Sedimentsammelbereich gelangen können, ist der Sedimentationsbehälter bevorzugt so auszubilden, daß sich der erste Bereich nach unten konisch verjüngt.

Da nach Beendigung des Sedimentationsprozesses, d.h. nach Schließen der Trennvorrichtung, im Sedimentsammelbereich neben abgetrenntem Sediment auch Flüssigkeit vorhanden ist, insbesondere, wenn der Sedimentsammelbereich nur zum Teil mit abgetrenntem Sediment gefüllt ist, wird vorgeschlagen, in einer unteren Zone des Sedimentsammelbereiches eine Siebvorrichtung vorzusehen; auf diese Weise kann vor Abzug des Sedimentes im Sedimentsammelbereich befindliche Flüssigkeit abgelassen und aufgefangen, sowie zum Reinigungsprozeß zurückgeführt werden. Hierzu ist eine weitere Rückführleitung vorzusehen. Die Siebvorrichtung kann vorzugsweise bündig in die Wandung des Sedimentsammelbereiches eingelassen sein, so daß sie sich nicht in das Innere des Sedimentsammelbereiches hineinerstreckt und dadurch den Sedimentauswurf behindert.

Wird im Zuge des Ablassens von im Sedimentsammelbereich befindlicher Flüssigkeit ein Teil des Druckluftpolsters dosiert über die ein Ventil aufweisende Verbindungsleitung in den Sedimentsammelbereich entspannt und damit Flüssigkeit aus dem Sedimentsammelbereich ausgeblasen, so wird der mit dem entfernten Sediment aus dem Reinigungsprozeß ausgetragene Flüssigkeitsanteil noch weiter reduziert.

Weitere Einzelheiten, Merkmale und Vorteile der Erfindung ergeben sich aus der nachfolgenden Beschreibung sowie der beigefügten schematischen Zeichnung einer eine erfindungsgemäße Sedimentationseinrichtung umfassenden Anlage zur Durchführung des erfindungsgemäßen Verfahrens.

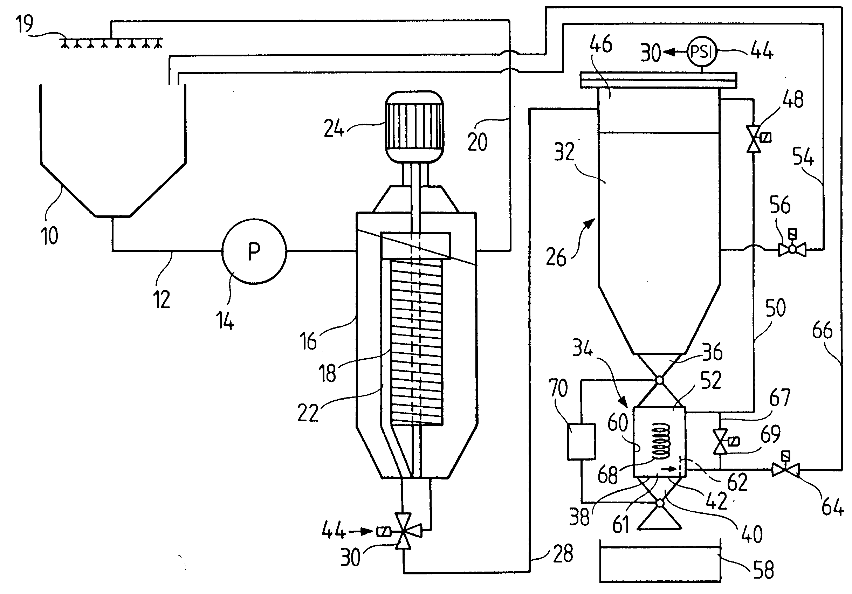

Im einzelnen zeigt die Zeichnung ein schematisch als Reinigungsbad dargestelltes Reinigungsgerät 10 zur Reinigung von insbesondere mit festen Substanzen verschmutzten Gegenständen; es kann sich hierbei jedoch auch um einen Reinigungsflüssigkeits-Sammelbehälter handeln zum Sammeln von von verschiedenen Reinigungsprozessen gelieferter, verbrauchter Reinigungsflüssigkeit und zur Weiterleitung an einen Aufbereitungsprozeß. Vom Boden des Reinigungsgerätes 10 führt eine Reinigungsflüssigkeitsleitung 12 weg, welche eine zum Aufbau eines Systemdruckes dienende Pumpe 14 aufweist, und mündet in einen Rückspülfilter 16. Die Reinigungsflüssigkeitsleitung 12 sowie die Pumpe 14 sind dabei so ausgebildet, daß verbrauchte Reinigungsflüssigkeit einschließlich darin enthaltener fester Schmutzpartikel bis zu einer Größe von etwa 20 mm vom Reinigungsgerät 10 bis zum Rückspülfilter 16 gefördert werden können. Zum Schutz der Pumpe 14 werden größere Fremdkörper zweckmäßigerweise durch ein nicht dargestelltes Pumpenschutzsieb zurückgehalten.

Im Inneren des Rückspülfilters 16 sind Filterelemente 18, insbesondere Drahtspaltfilterelemente, so angeordnet, daß sie von der aufzubereitenden Reinigungsflüssigkeit von außen nach innen durchströmt werden; dabei verbleibt der größte Teil der in der Reinigungsflüssigkeit enthaltenen Schmutzpartikel außen auf den Filterelementen 18 und ein dabei gebildetes, weitgehend von Schmutzpartikeln gereinigtes Permeat wird mindestens teilweise über eine die Abströmseite des Rückspülfilters 16 mit in das Reinigungsgerät 10 sprühenden Düsenvorrichtungen 19 verbindende Permeatrückführleitung 20 zum Reinigungsgerät 10 zurückgeführt.

Die Filterelemente 18 des Rückspülfilters 16 sind in dem hier dargestellten Ausführungsbeispiel zylindrisch ausgebildet bzw. bilden einen zylindrischen Siebkorb, welcher beim Betrieb des Filters von durch die Pumpe 14 in den Rückspülfilter 16 geförderter Reinigungsflüssigkeit durchströmt wird. Eine durch einen schrägen Strich angedeutete Trennwand separiert die Anströmseite von der unter anderem durch das Innere des Siebkorbs gebildeten Abströmseite des Rückspülfilters 16.

Um ein Zusetzen der Filterelemente 18 zu verhindern, werden diese durch einen an sich bekannten Rückspülvorgang kontinuierlich oder diskontinuierlich gereinigt. Insbesondere bei glatten Oberflächen der Filterelemente 18 hat es sich bewährt, die Filteroberflächen mechanisch freizuschaben; da bei Verwendung von Drahtspaltfilterelementen diese Form der Abreinigung jedoch nur eine Grobreinigung der Filterelemente darstellt, da durch mechanisches Freischaben nur der an der Oberfläche eines Drahtspaltfilterelementes befindliche Schmutz entfernt werden kann, wird der Siebkorb des betrachteten Rückspülfilters 16 sowohl in bekannter und daher nicht zu erläuternder Weise rückgespült als auch durch eine schematisch dargestellte Schabervorrichtung 22, welche durch einen elektrischen Antrieb 24 diskontinuierlich oder kontinuierlich um den Siebkorb umläuft, mechanisch abgereinigt.

Zum Austrag der Schmutzpartikel enthaltenden Rückspülflüssigkeit aus einem unteren anströmseitigen Bereich des Rückspülfilters 16 bzw. zum Abtrennen der Schmutzpartikel von der Rückspülflüssigkeit ist, wie aus der Zeichnung ersichtlich, eine erfindungsgemäße Sedimentationseinrichtung mit einem Sedimentationsbehälter 26 vorgesehen, welcher über eine Behältereinlaßleitung 28 und ein Zulaufventil 30 mit dem Rückspülfilter 16 verbunden ist. Der Sedimentationsbehälter 26 umfaßt einen ersten Bereich 32 und einen darunter befindlichen Sedimentsammelbereich 34, die voneinander mittels einer Trennvorrichtung 36 abtrennbar sind; der Sedimentsammelbereich 34 weist an einem unteren Ende 38 einen mit einem Verschluß 40 verschließbaren Behälterauslaß 42 auf. Dabei ist es vorteilhaft, daß der Behälterauslaß 42 eine gesamte Querschnittsfläche des Sedimentsammelbereiches 34 umfaßt, die durch den Verschluß 40 entweder freigegeben oder abgedeckt bzw. verschlossen werden kann.

Der Verschluß 40 wie auch die Trennvorrichtung 36 werden vorzugsweise durch Flachschieberventile gebildet, da diese geeignet sind, große Querschnittsflächen entweder freizugeben oder abzudecken. Bei dem vorliegenden Ausführungsbeispiel ist der Sedimentsammelbereich 34 als vom ersten Bereich 32 separierte, jedoch über die Trennvorrichtung 36 mit diesem verbundene Sedimentsammelkammer ausgebildet. Der Sedimentationsbehälter 26 ist weiterhin druckdicht ausgebildet und weist einen mit dem in der Behältereinlaßleitung 28 angeordneten Zulaufventil 30 zusammenwirkenden Druckschalter 44 auf. Von einem oberen Teilbereich 46 des ersten Bereiches 32 führt eine mit einem Ventil 48 versehene Verbindungsleitung 50 zu einer oberen Zone 52 des Sedimentsammelbereiches 34. Eine Rückführleitung 54 mit einem weiteren Ventil 56 verbindet einen unteren Teilbereich des ersten Bereich 32 des Sedimentationsbehälters 26 mit dem Reinigungsgerät 10.

Im Grundzustand der Sedimentationseinrichtung, also vor Beginn eines Drucksedimentationszyklus und nach Beendigung des vorhergehenden Drucksedimentationszyklus, ist der Sedimentationsbehälter 26 bis auf einen geringen Rest von Flüssigkeit in seinem ersten Bereich 32 entleert, und die Absperrarmaturen sind bis auf die Trennvorrichtung 36 zum Sedimentsammelbereich 34 geschlossen. Zur Einleitung eines neuen Sedimentationszyklus wird das Zulaufventil 30 geöffnet, und der Sedimentationsbehälter 26 wird aufgrund des auf der Anströmseite des Rückspülfilters existierenden Systemdruckes im Bereich zwischen 3 und 6 bar oder auch höher in wenigen Sekunden mit Rückspülflüssigkeit gefüllt. Dabei kommt es zur Verdrängung und Verdichtung des im Behälterinneren befindlichen Luftvolumens von z. B. 70 Litern, wobei sich im oberen Teilbereich 46 des ersten Bereiches 32 ein den Systemdruck aufweisendes Druckluftpolster bildet; das Zulaufventil 30 im Behältereinlaß 28 kann nun geschlossen werden, womit der Füllvorgang beendet wird. Bei dem zu beschreibenden Ausführungsbeispiel ist es besonders vorteilhaft, daß der Druckschalter 44 auf einen bestimmten Systemdruck einstellbar ist und bei Erreichen dieses Systemdrucks im Inneren des Sedimentationsbehälters 26 das Zulaufventil 30 betätigt, so daß dieses schließt. Zur vollständigen Automatisierung des Befüllungsvorganges ist es auch denkbar und vorteilhaft, den Druckschalter 44 so auszubilden, daß er, sobald der Grundzustand der Sedimentationseinrichtung erreicht ist und der Druck im Inneren ungefähr 1 bar beträgt, das Zulaufventil 30 öffnet und Rückspülflüssigkeit in den Sedimentationsbehälter 26 strömt. Hierbei ist es weiterhin vorteilhaft, wenn der Druckschalter 44 und die Absperrarmaturen derart zusammenwirken, daß der Druckschalter 44 das Zulaufventil 30 nur öffnen kann, wenn sich sämtliche Systemkomponenten im vorstehend beschriebenen Grundzustand befinden.

Nach Befüllen des Sedimentationsbehälters 26 und nachdem sich die Rückspülflüssigkeit im Inneren des Behälters beruhigt hat, beginnt die Sedimentationsphase; nach unten sinkende feste Schmutzpartikel gelangen durch die geöffnete Trennvorrichtung 36 in den Sedimentsammelbereich 34 und verdrängen darin befindliche Rückspülflüssigkeit. Durch die erfindungsgemäße Druckbeaufschlagung der sedimentierenden Rückspülflüssigkeit wird erfindungsgemäß erreicht, daß komprimierbare und/oder poröse Substanzen, wie beispielsweise Zellulose, Holzspäne etc., deren Dichte unter Normalbedingungen unter der einer wässrigen Reinigungsflüssigkeit liegt und die deshalb nicht absinken würden, derart komprimiert werden und/oder in erhöhtem Maße Flüssigkeit aufnehmen, daß ihre Dichte ansteigt und sie nach unten sinken. Da die Rückspülflüssigkeit, wie eingangs erläutert, Schmutzpartikel in der Größenordnung von 20 mm Durchmesser enthalten kann, ist es vorteilhaft, wenn die Trennvorrichtung 36 einen hinreichend großen Durchtrittsquerschnitt aufweist, so daß die sedimentierenden Substanzen, ohne die Trennvorrichtung zu verstopfen, in den Sedimentsammelbereich 34 gelangen können. Deshalb wird als Trennvorrichtung 36, wie schon oben erwähnt, ein Flachschieberventil verwendet. Kugelhähne scheinen für diesen Einsatzfall ebenfalls geeignet zu sein. Die Durchmesser der Durchtrittsquerschnitte der Trennvorrichtung 36 und des Verschlusses 40 betragen hier 65 bzw. 100 mm. Weiterhin ist es vorteilhaft, daß sich der erste Bereich 32 des Sedimentationsbehälters 26 nach unten konisch verjüngt und somit trichterförmig in die Trennvorrichtung 36 bzw. in den Sedimentsammelbereich 34 führt.

Wenn der Sedimentsammelbereich 34 mit abgesunkenen Schmutzpartikeln gefüllt ist oder wenn die im ersten Bereich 32 befindliche Rückspülflüssigkeit weitgehend von Schmutzpartikeln gereinigt ist, kann die Sedimentationsphase durch Schließen der Trennvorrichtung 36 beendet werden. Die Dauer der Sedimentationsphase bestimmt sich dabei nach Art und Grad der Verschmutzung der Rückspülflüssigkeit; durchschnittliche Sedimentations- oder Absinkzeiten betragen 10 bis 30 Minuten.

Zum Austragen der sedimentierten Schmutzpartikel und restlicher Rückspülflüssigkeit aus dem Sedimentsammelbereich 34 könnte einfach der Verschluß 40 geöffnet werden, so daß der Inhalt des Sedimentsammelbereiches 34 durch den Behälterauslaß 42 in einen Schmutzbehälter 58 herausfallen kann. Ein insbesondere bei hohem Systemdruck und/oder aus komprimierbaren Verunreinigungen in dem Sedimentsammelbereich 34 gebildeter Sedimentkuchen neigt jedoch besonders dazu, an den Wandungen 60 des Sedimentsammelbereiches 34 anzubacken, was den Sedimentaustrag aus dem Sedimentsammelbereich 34 behindert. Deshalb ist es ganz besonders vorteilhaft, das erfindungsgemäß gebildete Druckluftpolster im oberen Teilbereich 46 des ersten Bereiches 32 erfindungsgemäß zum druckluftunterstützten Sedimentauswurf zu verwenden. Nach Öffnen des Verschlusses 40 wird das Druckluftpolster erfindungsgemäß über die Verbindungsleitung 50 und das hierzu geöffnete Ventil 48 in die obere Zone 52 des Sedimentsammelbereiches 34 explosionsartig entspannt, wodurch der Sedimentkuchen aus dem Sedimentsammelbereich 34 herausgedrückt oder herausgesprengt wird. Hierzu ist es besonders vorteilhaft, wenn sich der Sedimentsammelbereich 34 nach unten konisch erweitert.

In einer unteren Zone 61 des Sedimentsammelbereiches 34 ist eine Siebvorrichtung 62 vorgesehen, die es ermöglicht, zunächst nur Flüssigkeit aus dem Sedimentsammelbereich 34 abzulassen. Diese Flüssigkeit kann über eine weitere, ein drittes Ventil 64 aufweisende, Rückführleitung 66 zum Reinigungsgerät 10 zurückgeführt werden. Um die im Sedimentsammelbereich 34 befindliche Rückspülflüssigkeit möglichst vollständig aus dem Sedimentsammelbereich 34 auszublasen, wird nach einem weiteren Erfindungsgedanken ein Teil der Druckluft aus dem Druckluftpolster über die Verbindungsleitung 50 in die obere Zone 52 des Sedimentsammelbereiches 34 entspannt. Dabei ist es vorteilhaft, wenn das Ventil 48 als Dosierventil ausgebildet ist, so daß nicht der volle Systemdruck den mit der Siebvorrichtung 62 versehenen Sedimentsammelbereich 34 beaufschlagt, sondern daß ein einstellbarer Luftstrom durch die Verbindungsleitung 50 in den Sedimentsammelbereich 34 und durch den darin befindlichen Sedimentkuchen hindurchströmt und daß somit restliche Rückspülflüssigkeit durch die Siebvorrichtung 62 hindurch in die Rückführleitung 66 ausgeblasen und schließlich zum Reinigungsgerät 10 zurückgeführt wird. Ganz besonders vorteilhaft ist es, hierfür nur einen Teil des Druckluftpolsters zu verwenden und sodann durch das vollständig geöffnete Ventil 48 zum druckluftunterstützten Sedimentauswurf das Druckluftpolster in den Sedimentsammelbereich 34, wie vorstehend beschrieben, zu entspannen. Hierbei kann gleichzeitig die siebartige Komponente 62 von außen nach innen mit einem Teil der angestauten Druckluft saubergeblasen werden, wofür eine die Verbindungsleitung 50 und die weitere Rückführleitung 66 verbindende Zweigleitung 67 mit einem vierten Ventil 69 vorgesehen ist. Wenn hierzu dieses vierte Ventil 69 geöffnet wird, empfiehlt es sich, das dritte Ventil 64 geschlossen zu halten.

Die Rückführung von weitgehend von Schmutzpartikeln gereinigter Rückspülflüssigkeit aus dem ersten Bereich 32 über die Rückführleitung 54 zum Reinigungsgerät 10 erfolgt zweckmäßigerweise bei geöffnetem Verschluß 40 und bei geöffnetem Ventil 48; wird nämlich über die Rückführleitung 54 bei gleichfalls geöffnetem Ventil 56 Flüssigkeit zum Reinigungsgerät 10 zurückgeführt, so kann zum Druckausgleich bei geöffnetem Verschluß 40 und bei geöffnetem Ventil 48 über die Verbindungsleitung 50 Umgebungsluft in den ersten Bereich 32 des Sedimentationsbehälters 26 gelangen, andernfalls würde im ersten Bereich 32 ein Unterdruck entstehen und die weitere Rückführung von Rückspülflüssigkeit behindern. Alternativ könnte im oberen Teilbereich 46 des ersten Bereiches 32 ein Belüftungsventil vorgesehen sein. Nach nahezu vollständiger Rückführung der Rückspülflüssigkeit, was über einen Druckschalter oder ein Zeitwerk bestimmt werden kann, wird durch Schließen des Verschlusses 40 sowie der Ventile 48 und 56 und anschließendes Öffnen der Trenneinrichtung 36 die Sedimentationseinrichtung wieder in ihren Grundzustand gebracht.

Für eine Automatisierung des Befüllungsvorganges ist es zweckmäßig und vorteilhaft, die Beendigung der Sedimentationsphase sowie den Sedimentauswurf und die Rückgewinnung von weitgehend von Schmutzpartikeln gereinigter wässriger Phase ebenfalls zu automatisieren. Dafür kann im Sedimentsammelbereich 34 ein den Befüllungsgrad messender Sensor 68 vorgesehen werden, der, wenn ein eingestellter Füllungsgrad im Sedimentsammelbereich 34 erreicht ist, die Trennvorrichtung 36 betätigt und damit die Sedimentationsphase beendet. Hierbei könnte es sich um einen induktiv arbeitenden Sensor handeln, der auf stets im Sediment vorhandene metallische Bestandteile wie Späne und dergleichen anspricht. Sodann ist es vorteilhaft, wenn der Sensor nach Schließen der Trenneinrichtung 36 den Verschluß 40 öffnet und im Anschluß daran zum druckluftunterstützten Sedimentauswurf das Ventil 48 öffnet. Nach Entleerung des Sedimentsammelbereiches 34 könnte dann derselbe Sensor das Schließen des Ventiles 48 sowie des Verschlusses 40 veranlassen. Durch einen Drucksensor, welcher den durch den druckluftunterstützten Sedimentauswurf erfolgten Druckabfall im ersten Bereich 32 wahrnimmt, kann dann die Rückführung von Rückspülflüssigkeit zum Reinigungsgerät 10 durch Betätigen des Ventiles 56 eingeleitet werden. Hierbei ist es vorteilhaft, wenn im oberen Teilbereich 46 ein Belüftungsventil vorgesehen ist. Nach einer bestimmten Zeit könnte durch automatisches Schließen des Ventiles 56 und durch Öffnen der Trenneinrichtung 36 der Grundzustand der erfindungsgemäßen Sedimentationseinrichtung wieder hergestellt werden. Selbstverständlich sind auch andere Möglichkeiten der Steuerung der Ventile und der Schließvorrichtungen der erfindungsgemäßen Sedimentationseinrichtung denkbar.

Die erfindungsgemäße Sedimentationseinrichtung ist vorteilhafterweise an eine beliebige Reinigungsflüssigkeitsanlage anschließbar und beispielsweise auch als hochleistungsfähiger Feststoffabscheider in Verbindung mit Aufbereitungsvorrichtungen einsetzbar, die hauptsächlich auf die Rückgewinnung von waschaktiven Substanzen ausgerichtet sind, jedoch nur weniger effiziente Feststoffabscheideeinrichtungen aufweisen.

## Patentansprüche

1. Verfahren zur Aufbereitung einer Schmutzpartikel enthaltenden Rückspülflüssigkeit eines Rückspülfilters (16) für eine in einem Reinigungsprozeß eingesetzte Reinigungsflüssigkeit, dadurch gekennzeichnet, daß aus dem Rückspülfilter (16) abgeführte Rückspülflüssigkeit einem Sedimentationsprozeß unterworfen und dabei zumindest zeitweise mit Druck beaufschlagt wird und daß nach Abschluß des Sedimentationsprozesses die Rückspülflüssigkeit mindestens von einem Teil eines dabei gewonnenen Sediments druckdicht abgetrennt und letzterer anschließend entfernt wird sowie ein zumindest weitgehend von Schmutzpartikeln befreiter Teil der Rückspülflüssigkeit in den Reinigungsprozeß zurückgeführt wird.

2. Verfahren nach Anspruch 1, dadurch gekennzeichnet, daß die sedimentierende Flüssigkeit mit dem auf der Anströmseite des Rückspülfilters (16) herrschenden Druck beaufschlagt wird.

3. Verfahren nach Anspruch 1 oder 2, dadurch gekennzeichnet, daß im Zuge der Druckbeaufschlagung über der zu sedimentierenden Flüssigkeit ein Druckluftpolster gebildet wird.

4. Verfahren nach Anspruch 3, dadurch gekennzeichnet, daß zu einem druckluftunterstützten Sedimentauswurf der abgetrennte Sedimentteil mit der Druckluft des Druckluftpolsters beaufschlagt und letzteres entspannt wird.

5. Verfahren nach einem oder mehreren der vorhergehenden Ansprüche, dadurch gekennzeichnet, daß vor dem Entfernen des Sediments darin enthaltene Rückspülflüssigkeit abgezogen und zum Reinigungsprozeß zurückgeführt wird.

6. Verfahren nach einem oder mehreren der vorhergehenden Ansprüche, dadurch gekennzeichnet, daß die Dauer des Sedimentationsprozesses nach Art und Grad der Verschmutzung der Rückspülflüssigkeit bestimmt wird.

7. Verfahren nach einem oder mehreren der vorhergehenden Ansprüche, dadurch gekennzeichnet, daß der Sedimentationsprozeß durch einen die Sedimentmenge messenden Sensor (68) beendet wird.

8. Sedimentationseinrichtung zur Aufbereitung einer Schmutzpartikel enthaltenden Reinigungsflüssigkeit eines industriellen Reinigungsprozesses (10) mit einem einen verschließbaren Einlaß (28) aufweisenden Sedimentationsbehälter (26) für die aufzubereitende Reinigungsflüssigkeit, der einen ersten Bereich (32) zur Aufnahme der durch Sedimentation aufbereiteten Reinigungsflüssigkeit sowie einen darunter befindlichen Sedimentsammelbereich (34) umfaßt, dadurch gekennzeichnet, daß der Sedimentationsbehälter (26) druckdicht verschließbar ist, daß der erste Bereich (32) und der Sedimentsammelbereich (34) durch eine Trennvorrichtung (36) druckdicht voneinander abtrennbar sind und daß der Sedimentsammelbereich (34) zum Abführen des Sediments einen Behälterauslaß (42) aufweist, welcher durch einen nach dem Schließen der Trennvorrichtung (36) öffenbaren Verschluß (40) verschließbar ist.

9. Sedimentationseinrichtung nach Anspruch 8, dadurch gekennzeichnet, daß der Sedimentationsbehälter (26) als Druckbehälter ausgebildet ist und daß Mittel (14, 28) zur Beaufschlagung des Behälters mit Druck vorgesehen sind.

10. Sedimentationseinrichtung nach Anspruch 9, dadurch gekennzeichnet, daß ein oberer Teilbereich (46) des Sedimentationsbehälters (26) durch eine ein Ventil (48) aufweisende Verbindungsleitung (50) mit dem Sedimentsammelbereich (34) zum druckluftunterstützten Sedimentauswurf verbunden ist.

11. Sedimentationseinrichtung nach einem oder mehreren der Ansprüche 8 bis 10, dadurch gekennzeichnet, daß im oberen Teilbereich (46) ein Druckschalter (44) vorgesehen ist zur Steuerung eines im Behältereinlaß (28) befindlichen Zulaufventiles (30).

12. Sedimentationseinrichtung nach einem oder mehreren der Ansprüche 8 bis 11, dadurch gekennzeichnet, daß ein Sensor (68) vorgesehen ist zur Messung des Füllungsgrades des Sedimentsammelbereiches (34).

13. Sedimentationseinrichtung nach einem oder mehreren der Ansprüche 8 bis 12, gekennzeichnet durch eine derart ausgebildete Steuerung (70) für die Trennvorrichtung (36) und den Verschluß (40) des Sedimentsammelbereiches (34), daß entweder nur die Trennvorrichtung (36) oder nur der Verschluß (40) geöffnet sein kann.

14. Sedimentationseinrichtung nach einem oder mehreren der Ansprüche 8 bis 13, dadurch gekennzeichnet, daß zum Ablassen von Reinigungsflüssigkeit aus dem Sedimentsammelbereich (34) vor dem Entfernen des Sediments in einer unteren Zone (61) des Sedimentsammelbereiches (34) eine Siebvorrichtung (62) vorgesehen ist.

15. Aufbereitungsvorrichtung für eine in einem industriellen Reinigungsprozeß eingesetzte Reinigungsflüssigkeit, mit einem eine Austragsleitung (28) für verschmutzte Rückspülflüssigkeit aufweisenden Rückspülfilter (16) und einer Sedimentationseinrichtung nach einem der Ansprüche 8 - 14, dadurch gekennzeichnet, daß der Sedimentationsbehälter (26) über den Behältereinlaß an die Austragsleitung (28) des Rückspülfilters (16) und der erste Bereich (32) des Sedimentationsbehälters (26) an eine zum Reinigungsprozeß führende Rückführleitung (54) zur mindestens teilweisen Rückführung von mindestens weitgehend von Schmutzpartikeln befreiter Reinigungsflüssigkeit angeschlossen ist.

16. Industrielle Reinigungsanlage mit einem Reinigungsgerät (10), einem eine Austragsleitung (28) für verschmutzte Rückspülflüssigkeit aufweisenden Rückspülfilter (16) zur Aufbereitung von in dem Reinigungsgerät verwendeter Reinigungsflüssigkeit, und mit einer Sedimentationseinrichtung nach einem oder mehreren der Ansprüche 8 - 14, dadurch gekennzeichnet, daß der Sedimentationsbehälter (26) über den Behältereinlaß an die Austragsleitung (28) des Rückspülfilters (16) angeschlossen ist und daß vom ersten Bereich (32) des Sedimentationsbehälters (26) eine Rückführleitung (54) zur mindestens teilweisen Rückführung von mindestens weitgehend von Schmutzpartikeln befreiter Reinigungsflüssigkeit zu dem Reinigungsgerät (10) wegführt.

## Claims

1. Method for processing a backwash liquid of a backwash filter (16) for a cleaning liquid used in a cleaning process, said backwash liquid containing impurities, characterized in that backwash liquid obtained from the backwash filter (16) is subjected to a sedimentation process and is acted upon during at least part of the sedimentation process by pressure, and in that after completion of the sedimentation process, the backwash liquid is separated in a pressure-tight manner from at least a portion of a thus obtained sediment, and the latter is subsequently removed, and a portion of the backwash liquid cleansed at least to a large extent of impurities is returned to the cleaning process.

2. Method as defined in claim 1, characterized in that the sedimenting liquid is acted upon by the pressure prevailing at the inflow side of the backwash filter (16).

3. Method as defined in claim 1 or 2, characterized in that in the course of having pressure act upon the liquid to be sedimented, a cushion of compressed air is formed above said liquid.

4. Method as defined in claim 3, characterized in that in order to eject the sediment with the aid of compressed air, the separated sediment portion is acted upon by the compressed air of the cushion of compressed air and the latter is expanded.

5. Method as defined in one or several of the preceding claims, characterized in that prior to removal of the sediment, backwash liquid contained therein is drawn off and returned to the cleaning process.

6. Method as defined in one or several of the preceding claims, characterized in that the length of the sedimentation process is determined by the type and degree of contamination of the backwash liquid.

7. Method as defined in one or several of the preceding claims, characterized in that the sedimentation process is terminated by a sensor (68) measuring the amount of sediment.

8. Sedimentation apparatus for processing a cleaning liquid of an industrial cleaning process (10), said cleaning liquid containing impurities and said sedimentation apparatus comprising a sedimentation tank (26) for the cleaning liquid to be processed, said sedimentation tank having a closeable inlet (28) and including a first region (32) for accommodating the cleaning liquid processed by sedimentation as well as a sediment collecting region (34) located thereunder, characterized in that the sedimentation tank (26) is closeable in a pressure-tight manner, in that the first region (32) and the sediment collecting region (34) are separable from one another in a pressure-tight manner by a separating device (36), and in that the sediment collecting region (34) has a tank outlet (42) closeable by a closure member (40) openable for discharging the sediment after closure of the separating device (36).

9. Sedimentation apparatus as defined in claim 8, characterized in that the sedimentation tank (26) is designed as a pressure tank, and in that means (14, 28) are provided for pressurizing the tank.

10. Sedimentation apparatus as defined in claim 9, characterized in that for ejecting the sediment with the aid of compressed air, an upper section (46) of the sedimentation tank (26) is connected with the sediment collecting region (34) by a connecting line (50) comprising a valve (48).

11. Sedimentation apparatus as defined in one or several of claims 8 to 10, characterized in that a pressure switch (44) is provided in the upper section (46) for controlling a supply valve (30) located in the tank inlet (28).

12. Sedimentation apparatus as defined in one or several of claims 8 to 11, characterized in that a sensor (68) is provided for measuring the degree of filling of the sediment collecting region (34).

13. Sedimentation apparatus as defined in one or several of claims 8 to 12, characterized by a control (70) for the separating device (36) and the closure member (40) of the sediment collecting region (34) designed such that either only the separating device (36) or only the closure member (40) can be open.

14. Sedimentation apparatus as defined in one or several of claims 8 to 13, characterized in that a screen device (62) is provided in a lower zone (61) of the sediment collecting region (34) for draining off cleaning liquid from the sediment collecting region (34) prior to the removal of the sediment.

15. Processing apparatus for a cleaning liquid used in an industrial cleaning process, comprising a backwash filter (16) having a discharge line (28) for contaminated backwash liquid, and a sedimentation apparatus as defined in one of claims 8 - 14, characterized in that the sedimentation tank (26) is connected via the tank inlet to the discharge line (28) of the backwash filter (16), and the first region (32) of the sedimentation tank (26) is connected to a return line (54) leading back to the cleaning process for at least partially returning cleaning liquid cleansed at least to a large extent of impurities.

16. Industrial cleaning installation comprising a cleaning apparatus (10), a backwash filter (16) for processing cleaning liquid used in the cleaning apparatus, said backwash filter having a discharge line (28) for contaminated backwash liquid, and a sedimentation apparatus as defined in one or several of claims 8 - 14, characterized in that the sedimentation tank (26) is connected via the tank inlet to the discharge line (28) of the backwash filter (16), and in that a return line (54) leads away from the first region (32) of the sedimentation tank (26) to the cleaning apparatus (10) for at least partially returning cleaning liquid cleansed at least to a large extent of impurities.

## Revendications

1. Procédé de traitement d'un liquide de rinçage à contre-courant, contenant des particules de souillure, d'un filtre à rinçage à contre-courant (16) pour un liquide de lavage utilisé dans un processus de lavage, caractérisé par le fait que l'on soumet à un processus de sédimentation un liquide de rinçage à contre-courant évacué hors du filtre à rinçage à contre-courant (16) et qu'on l'y soumet, au moins par intermittences, à une pression et qu'après achèvement du processus de sédimentation on sépare, en mode étanche à la pression, du liquide de rinçage à contre-courant au moins une partie d'un sédiment que l'on y obtient et qu'ensuite on élimine ce dernier et que l'on renvoie dans le processus de nettoyage une partie du liquide de rinçage à contre-courant au moins largement déchargée de particules de souillure.

2. Procédé selon la revendication 1, caractérisé par le fait que le liquide à exposer à une sédimentation est contraint par la pression régnant du côté entrée du filtre à rinçage à contre-courant (16).

3. Procédé selon la revendication 1 ou 2, caractérisé par le fait qu'au cours de la contrainte par la pression un matelas d'air comprimé se forme au-dessus du liquide à traiter par sédimentation.

4. Procédé selon la revendication 3, caractérisé par le fait que, pour une expulsion du sédiment aidée par l'air comprimé, on contraint la portion du sédiment séparée par l'air comprimé du matelas d'air comprimé et que ce dernier se détend

5. Procédé selon l'une ou plusieurs des revendications précédentes, caractérisé par le fait qu'avant l'élimination du sédiment on en extrait le liquide de rinçage à contre-courant qui y est contenu et qu'on le renvoie au processus de lavage.

6. Procédé selon l'une ou plusieurs des revendications précédentes, caractérisé par le fait que la durée du processus de sédimentation se détermine selon le type et le degré de souillure du liquide de rinçage à contre-courant.

7. Procédé selon l'une ou plusieurs des revendications précédentes, caractérisé par le fait qu'il est mis fin au processus de sédimentation par un détecteur (68) qui mesure la quantité de sédiment.

8. Dispositif de sédimentation pour le traitement d'un liquide de lavage, contenant des particules de souillure, d'un processus de lavage industriel (10), comportant, pour le liquide de lavage à traiter, un récipient de sédimentation (26) qui présente une entrée obturable (28) et comporte une première zone (32) pour recevoir le liquide de lavage traité par sédimentation ainsi qu'une zone (34) de collecte du sédiment qui se trouve par-dessous, caractérisé par le fait que le récipient de sédimentation (26) est obturable avec étanchéité à la pression, que la première zone (32) et la zone (34) de collecte du sédiment peuvent être séparées l'une de l'autre, avec étanchéité à la pression, par un organe de séparation (36) et que la zone (34) de collecte du sédiment présente, pour évacuer le sédiment, une sortie de récipient (42) que peut obturer un obturateur (40) qui peut s'ouvrir après la fermeture de l'organe de séparation (36).

9. Dispositif de sédimentation selon la revendication 8, caractérisé par le fait que le récipient de sédimentation (26) est conçu en tant que récipient sous pression et que des moyens (14, 28) sont prévus pour contraindre le récipient par une pression.

10. Dispositif de sédimentation selon la revendication 9, caractérisé par le fait qu'une zone partielle supérieure (46) du récipient de sédimentation (26) est reliée, par une conduite de liaison (50) présentant une vanne (48), avec la zone (34) de collecte du sédiment pour l'expulsion du sédiment aidée par l'air comprimé.

11. Dispositif de sédimentation selon une ou plusieurs des revendications 8 à 10, caractérisé par le fait que dans la zone partielle supérieure (46) est prévu un manostat (44) pour commander une vanne d'arrivée (30) qui se trouve dans l'entrée (28) du récipient.

12. Dispositif de sédimentation selon une ou plusieurs des revendications 8 à 11, caractérisé par le fait qu'est prévu un détecteur (28) pour la mesure du taux de remplissage de la zone (34) de collecte du sédiment.

13. Dispositif de sédimentation selon une ou plusieurs des revendications 8 à 12, caractérisé par une commande (70) pour l'organe de séparation (36) et pour l'obturateur (40) de la zone (34) de collecte du sédiment conçue de façon que ne puisse être ouvert que soit l'organe de séparation (36) soit l'obturateur (40).

14. Dispositif de sédimentation selon une ou plusieurs des revendications 8 à 13, caractérisé par le fait qu'un organe de tamisage (62) est prévu pour faire sortir du liquide de lavage hors de la zone (34) de collecte du sédiment avant l'évacuation du sédiment dans une zone inférieure (61) de la zone (34) de collecte du sédiment.

15. Installation de traitement pour un liquide de lavage utilisé dans un processus de lavage industriel, comportant un filtre à rinçage à contre-courant (16) présentant une conduite d'extraction (28) pour du liquide de rinçage à contre-courant souillé ainsi qu'un dispositif de sédimentation selon l'une des revendications 8-14, caractérisée par le fait que le récipient de sédimentation (26) est relié, au-dessus de l'entrée du récipient, à la conduite d'extraction (28) du filtre à rinçage à contre-courant (16) et que la première zone (32) du récipient de sédimentation (26) est reliée à une conduite de recyclage (54), conduisant au processus de lavage, pour le recyclage au moins partiel du liquide de lavage au moins largement déchargé de particules de souillure.

16. Installation industrielle de lavage comportant un appareil de nettoyage (10), un filtre à rinçage à contre-courant (16), présentant une conduite d'extraction (28) pour du liquide de rinçage à contre-courant souillé, pour traiter un liquide de lavage employé dans l'appareil de lavage, ainsi qu'un dispositif de sédimentation selon une ou plusieurs des revendications 8-14, caractérisée par le fait que le récipient de sédimentation (26) est relié, au-dessus de l'entrée du récipient, à la conduite d'extraction (28) du filtre à rinçage à contre-courant (16) et que de la première zone (32) du récipient de sédimentation (26) part pour l'appareil de lavage (10) une conduite de recyclage (54) pour le recyclage au moins partiel du liquide de lavage au moins largement déchargé de particules de souillure.
